Europäisches Patentamt

European Patent Office

Office européen des brevets

(19)

(11) Veröffentlichungsnummer : **0 503 256 B1**

(12) **EUROPÄISCHE PATENTSCHRIFT**

(45) Veröffentlichungstag der Patentschrift :
**29.11.95 Patentblatt 95/48**

(51) Int. Cl.$^6$ : **G05B 19/042,** G05B 19/05

(21) Anmeldenummer : **92101412.2**

(22) Anmeldetag : **29.01.92**

(54) **Programmierbare Steuer- und Regeleinrichtung.**

(30) Priorität : **14.03.91 CH 772/91**

(43) Veröffentlichungstag der Anmeldung :
**16.09.92 Patentblatt 92/38**

(45) Bekanntmachung des Hinweises auf die
Patenterteilung :
**29.11.95 Patentblatt 95/48**

(84) Benannte Vertragsstaaten :
**CH DE FR LI SE**

(56) Entgegenhaltungen :
**ELEKTRONIK Bd. 35, Nr. 22, September 1986,
MüNCHEN,DE Seiten 160 - 164; V.WAIS, O.-
GRAF,S.WETTACH: 'Automatisierungssystem
- auch für den kleineren Industriebetrieb'
ATP/Automatisierungstechnische Praxis,
Jahrgang 30 (1988) No. 4, München, DE, Seiten
186 - 190; H.-J. Frisch und W. Voss 'Steuerun-
gen von variablen Chargenproduktionen mit
Standardsoftware : Das Softwarepaket
"Grundoperationen" '**

(73) Patentinhaber : **Landis & Gyr Technology
Innovation AG
CH-6301 Zug (CH)**

(72) Erfinder : **Degunda, Niklaus
Stolzengraben 21
CH-6317 Oberwil (CH)**
Erfinder : **Haab, Walter
Widenstrasse 6
CH-6317 Oberwil (CH)**
Erfinder : **Wehrli, Herbert
Seggenstrasse 8
CH-8865 Bilten (CH)**
Erfinder : **Muggli, Werner
Chesslermatt
CH-8911 Rifferswil (CH)**
Erfinder : **Wehrli, Peter
Frohmoosstrasse 30
CH-8908 Hedingen (CH)**

(74) Vertreter : **Müller, Hans-Jürgen, Dipl.-Ing. et al
Patentanwälte Dipl.-Ing. Hans-Jürgen Müller,
Dipl.-Chem.Dr. Gerhard Schupfner,
Dipl.-Ing. Hans-Peter Gauger,
Postfach
101161
D-80085 München (DE)**

EP 0 503 256 B1

## Beschreibung

Die Erfindung bezieht sich auf eine programmierbare Steuer- und Regeleinrichtung der im Oberbegriff des Anspruchs 1 genannten Art.

Eine derartige Steuer- und Regeleinrichtung ist aus der DE-Z Elektronik, Band 35, Nr. 22, "Automatisierungssystem - auch für den kleineren Industriebetrieb" bekannt. Sie enthält einen Mikroprozessor, einen Programmspeicher, einen Datenspeicher und Schnittstellen-Baugruppen in Form von Eingängen von und Ausgängen zu der zu steuernden Anlage. Der Programmspeicher enthält dabei eine Funktionsblock-Bibliothek, auf die durch ein Ablaufsteuerprogramm zugegriffen wird. Dabei werden bestimmte Eingänge der Funktionsblöcke entsprechend den Gegebenheiten des Prozesses eingestellt (parametriert).

Aus der DE-Z Automatisierungstechnische Praxis, Jahrgang 30 (1988), Nr. 4, S. 186 bis 190, ist ein Softwarepaket bekannt, das im Zusammenhang mit einem Prozeßleitsystem zur Steuerung variabler Chargenproduktionen geeignet ist. Damit läßt sich die Herstellung von Produkten aufgrund wechselnder Rezepturen automatisieren.

Solche Steuer- und Regeleinrichtungen eignen sich beispielsweise zur Steuerung und Regelung komplexer technischer Systeme, wobei Heizungs-, Lüftungs- und Klimaanlagen oder allgemein Gebäudeautomationsanlagen als Beispiel genannt seien.

Eine Steuer- und Regeleinrichtungen der im Oberbegriff des Anspruchs 1 genannten Art ist aus der US-PS 4,155,115 bekannt. Sie enthält einen Mikroprozessor, einen Programmspeicher, einen Datenspeicher und Schnittstellen-Baugruppen für analoge und digitale Verbindungen zur zu steuernden Anlage.

Bekannt ist außerdem aus der DE-AS 27 55 822 eine Einrichtung zur Prozeßdatenverarbeitung, bei der aus Elementaroperationen Funktionselemente gebildet und in einem Speicher abgelegt werden.

Programmierbare digitale Steuer- und Regeleinrichtungen enthalten ein in einem Programmspeicher abgelegtes Programm, das dem Prozessor der Steuer- und Regeleinrichtung Anweisungen gibt. Die Gesamtsumme der Anweisungen ist das ausführbare Programm, das die Anlage steuert. Die Herstellung eines solchen Programms ist unter dem Stichwort Software-Entwicklung bekannt. Sie ist im allgemeinen sehr arbeits- und zeitaufwendig.

Für Großserien-Produkte spielen die Kosten für die Entwicklung der Software keine so große Rolle, weil sich die Entwicklungskosten auf eine große Zahl von Geräten verteilen. Bei Anlagen, die nach Kundenwünschen geplant werden, ist es dagegen meistens notwendig, die Software speziell für jede Anlage neu zu entwickeln. Bei der Vielzahl von möglichen Anlagenbauarten führt dies zu einer beinahe unübersehbaren Anzahl von Steuer- und Regelprogrammen, deren jedes enorme Kosten bei dessen Herstellung verursacht.

Der Erfindung liegt die Aufgabe zugrunde, eine Steuer- und Regeleinrichtung zu schaffen, deren Programmierung besonders einfach und somit kostengünstig durchzuführen ist.

Die genannte Aufgabe wird erfindungsgemäß durch die Merkmale des Anspruchs 1 gelöst. Vorteilhafte Ausgestaltungen ergeben sich aus den abhängigen Ansprüchen.

Nachfolgend wird ein Ausführungsbeispiel der Erfindung anhand der Zeichnung näher erläutert.

Es zeigen:

Fig. 1      ein Schema der Programm- und Datenorganisation,
Fig. 2      ein Schema einer Ablaufsteuerung,
Fig. 3      ein Schema eines Funktionsblocks,
Fig. 4      ein Anlagenschema und
Fig. 5      ein Funktionsblock-Verknüpfungsschema.

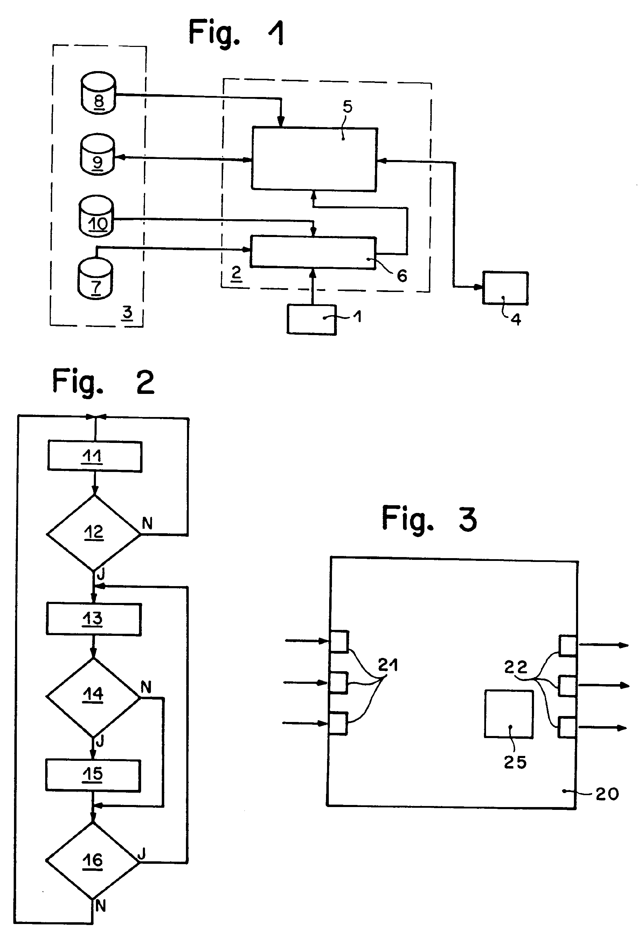

In der Fig. 1 bedeutet 1 einen Mikroprozessor. Mit 2 ist ein Programmspeicher, mit 3 ein Datenspeicher und mit 4 eine Schnittstellen-Baugruppe von und zu einer zu steuernden Anlage bezeichnet. Schnittstellen-Baugruppen 4 sind in der Regel mehrfach vorhanden.

Der Programmspeicher 2 beinhaltet im Gegensatz zum Stand der Technik nicht ein festes, ausführbares Programm, sondern enthält eine Funktionsblock-Bibliothek 5 und ein Ablauf-Steuerprogramm 6. Die Funktionsblock-Bibliothek 5 ist eine Menge fix programmierter, voneinander unabhängiger, jedoch aufeinander abgestimmter und miteinander verknüpfbarer Funktionsblöcke. Jeder Funktionsblock besteht aus einer bestimmten Folge von Programmanweisungen.

Fix programmiert bedeutet, daß jeder Funktionsblock aus einer in einem Festwertspeicher des Programmspeichers 2 vorliegenden Folge von Programmanweisungen in Maschinensprache besteht, die vom Mikroprozessor 1 ausführbar ist. Mit dem Terminus "voneinander unabhängig" ist gemeint, daß jeder Funktionsblock eine in sich geschlossene Einheit bildet, daß also keine gegenseitigen Beeinflussungen oder Aufrufe von Funktionsblöcken untereinander erfolgen. Die Funktionsblöcke sind aber aufeinander abgestimmt, was bedeutet, daß die einzelnen Funktionsblöcke quasi normierte Ein- und Ausgänge besitzen, so daß sich Funktionsblöcke miteinander verbinden lassen. Verbinden bedeutet, daß beispielsweise ein Ausgang eines Funktionsblocks an einen Eingang eines anderen Funktionsblocks Daten übergeben kann. Daten ist hier in weitgefaßtem Sinne zu verstehen: Es kann sich um Daten im engeren Sinne, aber auch um Befehle und Meldungen handeln.

Der Datenspeicher 3 enthält mehrere Arten von Daten. Eine erste Art von Daten bilden Verknüpfungsinformationen 7. Die Verknüpfungsinformationen 7 enthalten Informationen darüber, welche Funktionsblöcke aus der Funktionsblock-Bibliothek 5 benutzt werden und wie diese Funktionsblöcke miteinander zu verknüpfen sind. Jeder einzelne Datensatz der Verknüpfungsinformationen 7 besteht aus Angaben der jeweils beteiligten Funktionsblöcke und einer Kennzeichnung von verwendeten Ein- und Ausgängen der Funktionsblöcke und zugehöriger Parameter, was nachfolgend beschrieben wird.

Eine zweite Art von Daten bilden Funktionsblock-Parameter 8. Zu jedem der verschiedenen Funktionsblöcke der Funktionsblock-Bibliothek 5 gehört ein Satz Funktionsblock-Parameter 8, die das effektive Verhalten und den Funktionsumfang eines Funktionsblocks definieren. Die Gesamtheit der Funktionsblock-Parameter 8 besteht aus einzelnen, den Funktionsblöcken zugehörigen Datensätzen, deren jeder aus einer Kennzeichnung der Art des Parameters, des Datentyps und der Zugriffsart besteht. Mit Art des Parameters ist dabei gemeint, ob es sich beispielsweise um einen Eingang oder einen Ausgang handelt. Im Datentyp ist festgelegt, ob es sich zum Beispiel um einen reellen Wert oder eine logische Größe handelt, und mit der Zugriffsart ist festgelegt, ob Daten nur lesbar oder lesbar und schreibbar sind.

Eine dritte Art von Daten sind Prozeßdaten 9. Dies sind einerseits Ein- und Ausgabedaten der Funktionsblöcke, andererseits Daten für die zu steuernde Anlage bzw. aus der zu steuernden Anlage, die über Schnittstellen-Baugruppen 4 ausgegeben oder eingelesen werden. Die Prozeßdaten 9 bestehen ihrerseits aus einzelnen Daten, die beispielsweise durch einen Datennamen identifizierbar sind. Daten aus der zu steuernden Anlage werden mit Hilfe von speziellen Funktionsblöcken von der Anlage in den Datenspeicher 3 transferiert, was später noch beschrieben wird.

Vorteilhaft kann auch eine vierte Art von Daten vorhanden sein, nämlich Ablaufinformationen 10. Diese steuern, was später noch beschrieben wird, das Ablauf-Steuerprogramm 6. Linien zwischen den Elementen der Fig. 1 bedeuten Datenflüsse.

Ein Beispiel für das Ablauf-Steuerprogramm 6 ist in der Fig. 2 schematisch wiedergegeben. Mit 11 ist ein erster Aktionsblock bezeichnet, dessen Funktion "Warten auf Taktzyklus" lautet. Diesem nachgeordnet ist ein erster Entscheidungsblock 12, dessen Reaktion davon abhängt, ob eine Verknüpfungsinformation 7 vorliegt. Ist eine solche Verknüpfungsinformation 7 vorhanden, wird der Ablauf mit einem nachfolgenden zweiten Aktionsblock 13 weitergeführt, dessen Tätigkeit "Lesen der folgenden Verknüpfungsinformation 7" lautet. Ist dagegen keine weitere Verknüpfungsinformation 7 vorhanden, was beispielsweise durch ein "END OF DATA"-Signal im Satz der Verknüpfungsinformationen 7 markiert ist, so wird an den Eingang des ersten Aktionsblocks 11 zurückgesprungen und somit auf den nächsten Taktzyklus gewartet.

Nach der Ausführung der Aktion des Aktionsblocks 13, dem Lesen der folgenden Verknüpfungsinformation 7, folgt ein zweiter Entscheidungsblock 14, in dem beispielsweise anhand der vorliegenden Verknüpfungsinformation 7 entschieden wird, ob ein nächster Funktionsblock der Funktionsblock-Bibliothek 5 aufgerufen werden muß. Als Entscheidungskriterium für die Notwendigkeit des Aufrufs eines Funktionsblocks kann vorteilhaft auch herangezogen werden, ob Prozeßdaten, die von einem Funktionsblock berücksichtigt werden, geändert haben. Haben solche Prozeßdaten nicht geändert, kann auf den Aufruf des Funktionsblocks verzichtet werden. Dadurch läßt sich die Zykluszeit verkürzen, was das Zeitverhalten der Steuer- und Regeleinrichtung verbessert. Muß ein nächster Funktionsblock aufgerufen werden, so folgt anschließend ein dritter Aktionsblock 15. Die Aktion des Aktionsblocks 15 besteht im Aufrufen des in der zuvor bearbeiteten Verknüpfungsinformation 7 angegebenen Funktionsblocks der Funktionsblock-Bibliothek 5 und in der Übergabe der Parameter an diesen Funktionsblock.

Anschließend an die Abarbeitung des Aktionsblocks 15 wird ein dritter Entscheidungsblock 16 abgearbeitet. Dies geschieht auch dann, wenn beim Entscheidungsblock 14 festgestellt wurde, daß kein Funktionsblock der Funktionsblock-Bibliothek 5 aufgerufen werden muß. Im Entscheidungsblock 16 wird ermittelt, ob noch ein Funktionblock der Funktionsblock-Bibliothek 5 abgearbeitet werden muß. Muß kein weiterer Funktionsblock abgearbeitet werden, was beispielsweise wiederum durch ein "END OF DATA"-Signal gekennzeichnet sein kann, so erfolgt ein Sprung zurück zum Eingang des Aktionsblocks 11. Muß jedoch ein weiterer Funktionsblock abgearbeitet werden, so erfolgt ein Sprung zurück zum Eingang des Aktionsblocks 13.

Die Fig. 3 zeigt ein Schema eines Funktionsblocks 20 in allgemeiner Form. Jeder Funktionsblock 20 besitzt Eingänge 21 und Ausgänge 22. Ein Eingang 21 eines Funktionsblocks 20 kann mit einem Ausgang 22 eines anderen Funktionsblocks 20 und ein Ausgang 22 mit einem Eingang 21 eines anderen Funktionsblocks 20 verbunden werden. Auch Mehrfach-Verbindungen sind möglich, so daß ein Ausgang 22 eines Funktionsblocks 20 mit je einem Eingang 21 anderer Funktionsblöcke 20 verbunden werden kann. Die Verbindungen sind jedoch nur statthaft und möglich, wenn der Ausgang 22 des einen Funktionsblocks 20 und der Eingang des anderen Funktionsblocks 20 hinsichtlich der verwendeten Datentypen und Datenstruktur übereinstimmen. Jeder Funktionsblock 20 besitzt in der Regel außerdem mindestens einen Parameter-Satz 25, mit dem das Verhalten des Funktionsblocks 20 beeinflußt werden kann. Der Parameter-Satz 25 wird durch Übergabe eines Parametersatzes der Funktionblock-Parameter 8 aktualisiert. Die Übergabe eines Parameter-Satzes 25 an den Funktionsblock erfolgt, wie zuvor schon erwähnt, durch die Ablaufsteuerung 6. Der Parameter-Satz 25 kann aber auch schon vorbestimmte Werte, sogenannte Default-Werte, enthalten. Diese können durch einen Parametersatz der Funktionsblock-Parameter 8 überschrieben werden.

Für verschiedene Aufgaben im Zusammenhang mit einer Steuerung und Regelung enthält die Funktionsblock-Bibliothek 5 verschiedene Funktionsblöcke 20, die beispielsweise anhand eines Funktionsblock-Namens unterschieden werden können. Nachfolgend sind zunächst einige dieser Funktionsblöcke 20 aufzählend mit möglichen Funktionsblock-Namen genannt und im einzelnen erläutert.

Ein erster Typ eines Funktionsblocks 20 ist der Typ "ANALOG INPUT". Er dient der Weitergabe eines Signals eines analogen Meßwert-Aufnehmers an das gesamte Steuer- und Regelsystem. Ein solcher Funktionsblock 20 wird eingangsseitig mit einer Schnittstellen-Baugruppe 4 verknüpft. Der Funktionsblock 20 des Typs "ANALOG INPUT" veranlaßt auch, daß der Wert der Prozeßgröße in den Datensatz der Prozeßdaten 9 geschrieben wird.

Ein zweiter Typ eines Funktionsblocks 20 ist der Typ "STETIG ZWEIPUNKT". Er dient der Umwandlung eines stetigen Signals eines Funktionsblocks 20 vom Typ "ANALOG INPUT" in ein Zweipunkt-Signal. Der Wert des abgegebenen Zweipunkt-Signals hängt dabei vom stetigen Signal an seinem Eingang und den im Parameter-Satz 25 festgelegten Grenzwerten ab.

Ein dritter Typ eines Funktionsblocks 20 ist der Typ "ZEITSCHALTPROGRAMM". Er dient dazu, bestimmte Vorgänge im Steuer- und Regelsystem zeitabhängig zu machen. Zu seinem Parameter-Satz 25 gehören dabei beispielsweise EIN- und AUS-Schalt-Zeitpunkte.

Ein vierter Typ eines Funktionsblocks 20 ist der Typ "AUSWAHL". Er kann in Abhängigkeit von seinem Parameter-Satz 25 unterschiedliche Funktionen ausüben. So kann er beispielsweise aus N an seinen Eingängen anliegenden Signalen das kleinste oder das größte auswählen oder aus den Signalen den Mittelwert bilden. Er ist zur Verarbeitung stetiger oder stufiger Signale geeignet.

Ein fünfter Typ eines Funktionsblocks 20 ist der Typ "FOLGE". Er kann, wiederum in Abhängigkeit von seinem Parameter-Satz 25 an seinen Ausgängen Signale in bestimmter zeitlicher Folge entstehen lassen. So kann beispielsweise zuerst an einem ersten Ausgang 22 zu einem nachgeordneten Funktionsblock 20 ein Signal entstehen und danach auch an einem zweiten Ausgang 22 zu einem nachgeordneten Funktionsblock 20. Es sind beispielsweise sechs Ausgänge 22 zu nachgeordneten Funktionsblöcken 20 vorhanden, wobei die Zahl der effektiv genutzten Ausgänge 22 durch den Parameter-Satz 25 bestimmt wird. Auch die Reihenfolge der Ansteuerung der verschiedenen Ausgänge 22 ist durch den Parameter-Satz 25 bestimmt.

Ein sechster Typ eines Funktionsblocks 20 ist der Typ "MOTOR". Er dient beispielsweise der Ansteuerung einer Schnittstellen-Baugruppe 4, an die ein Motor angeschlossen ist. Vom Funktionsblock-Typ "MOTOR" können auch der Motorüberwachung dienende Elemente, die ebenfalls über eine Schnittstellen-Baugruppe 4 angeschlossen werden, abgefragt werden.

Ein siebenter Typ eines Funktionsblocks 20 ist der Typ "BEFEHLSAUSGABE". Er dient der Umsetzung eines Logiksignals in einen Befehl für eine Schnittstellen-Baugruppe 4. Deshalb wird ein Funktionsblock 20 dieses Typs ausgangsseitig immer mit einer Schnittstellen-Baugruppe 4 verknüpft.

Ein achter Typ eines Funktionsblocks 20 ist der Typ "BINÄR INPUT". Er dient der Weitergabe eines Signals eines über eine Schnittstellen-Baugruppe 4 angeschlossenen Überwachungsgeräts an das gesamte Steuer- und Regelssystem.

Nachfolgend wird als Beispiel die Arbeitsweise des Funktionsblocks Typ "STETIG ZWEIPUNKT" beschrieben. Er dient beispielsweise als Zweipunktschalter mit zwei Stellungen I und II der Umwandlung eines stetigen Signals eines Funktionsblocks vom Typ "ANALOG INPUT" in ein Zweipunkt-Signal. Der Wert des abgegebenen Zweipunkt-Signals hängt dabei vom stetigen Signal an seinem Eingang und den im Parameter-Satz 25 festgelegten Grenzwerten ab. Im Parameter-Satz 25 ist ein unterer Grenzwert $W_U$ und ein oberer Grenzwert $W_O$ festgelegt.

Durch einen Parameter für diesen Funktionsblock läßt sich vorteilhaft das Schaltverhalten beeinflussen. So wird mittels eines Parameters festgelegt, ob die Stellung I dem EIN- oder dem AUS-Zustand und die Stellung II dem AUS- oder dem EIN-Zustand entspricht. Der gleiche Funktionsblock kann somit für unterschiedliche Aufgaben verwendet werden. So kann damit ein Heizbetrieb gesteuert werden, bei dem die Heizung eingeschaltet werden soll, wenn der Istwert unter dem unteren Grenzwert $W_U$ liegt, und eingeschaltet bleiben soll, bis der Istwert über den oberen Grenzwert $W_O$ steigt. Der gleiche Funktionsblock kann, mit anders gesetztem Parameter, auch zum Kühlbetrieb verwendet werden, bei dem die Kühlung ausgeschaltet werden soll, wenn der Istwert unter den unteren Grenzwert $W_U$ liegt, und ausgeschaltet bleiben soll, bis der Istwert über den oberen Grenzwert $W_O$ steigt.

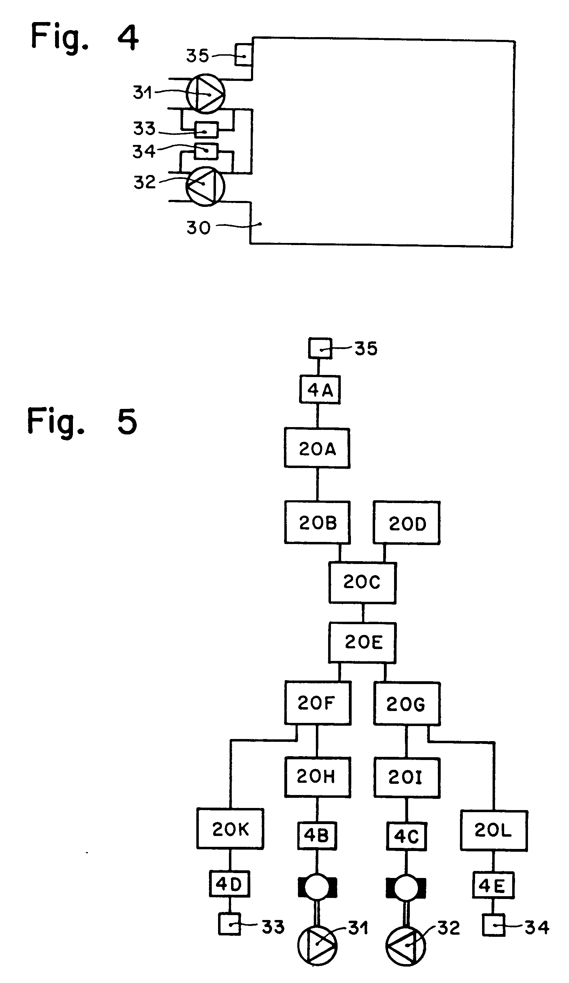

Die Fig. 4 zeigt ein Schema einer einfachen Anlage, die durch eine erfindungsgemäße Steuer- und Regeleinrichtung gesteuert werden kann. Einem Raum 30 soll mittels eines Zuluft-Ventilators 31 Frischluft zugeführt werden und aus dem Raum 30 soll mittels eines Abluft-Ventilators 32 abgeführt werden. Jeder der Ventilatoren 31, 32 wird durch einen Strömungswächter überwacht: der Zuluft-Ventilator 31 durch einen ersten Strömungswächter 33 und der Abluft-Ventilator durch einen Strömungswächter 34. Die beiden Ventilatoren 31, 32 sollen gemäß einem Zeitschaltprogramm gesteuert werden. Zusätzlich sollen die Ventilatoren 31, 32 ausgeschaltet werden, wenn die mittels eines Außentemperaturfühlers 35 gemessene Außentemperatur unter 0 Grad Celsius fällt, und wieder eingeschaltet werden, wenn die Außentemperatur über 5 Grad Celsius steigt.

Für die Steuerung dieser Anlage ist ein Funktionsblock-Schema nach der Fig. 5 erforderlich. Dieses Funktionsblock-Schema zeigt die Beziehungen zwischen verschiedenen Funktionsblöcken aus der Funktionsblock-Bibliothek 5. Die in Form von Strichen zwischen den verschiedenen Funktionsblöcken 20A bis 20I gezeichneten Relationen sind keine hardwaremäßigen Verdrahtungen, sondern es handelt sich dabei um Verknüpfungen, die in Form von Verknüpfungsinformationen 7 im Datenspeicher 3 abgelegt sind.

An den ersten Funktionsblock 20A ist eingangsseitig über eine Schnittstellen-Baugruppe 4A der Außentemperaturfühler 35 angeschlossen. Der Funktionsblock 20H ist ausgangsseitig an eine Schnittstellen-Baugruppe 4B angeschlossen, an die der Motor des Zuluft-Ventilators 31 elektrisch verdrahtet ist. In gleicher Weise ist der Abluft-Ventilator 32 an eine Schnittstellen-Baugruppe 4C elektrisch angeschlossen, deren Eingang mit einem Ausgang des Funktionsblocks 20I verknüpft ist. Analog dazu sind die Strömungswächter 33 und 34 über Schnittstellen-Baugruppen 4D bzw. 4E an die Funktionsblöcke 20K bzw. 20L angeschlossen.

Die nachfolgende Liste gibt an, von welchem Typ die einzelnen Funktionsblöcke 20 sind:

| Funktionsblock | Typ |
|---|---|
| 20A | ANALOG INPUT |
| 20B | STETIG ZWEIPUNKT |
| 20C | AUSWAHL |
| 20D | ZEITSCHALTPROGRAMM |
| 20E | FOLGE |
| 20F | MOTOR |
| 20G | MOTOR |
| 20H | BEFEHLSAUSGABE |
| 20I | BEFEHLSAUSGABE |
| 20K | BINÄR INPUT |
| 20L | BINÄR INPUT |

Die Funktionsblöcke 20F und 20G sind nicht unterschiedliche Funktionsblöcke, sondern stellen je einen Aufruf des Funktionsblocks vom Typ "MOTOR" dar. Es handelt sich also um ein und denselben Funktionsblock der Funktionsblock-Bibliothek 5. In gleicher Weise sind auch die Funktionsblöcke 20H und 20I nicht unterschiedliche Funktionsblöcke, sondern jeweils Aufrufe des Funktionsblocks vom Typ "BEFEHLSAUSGABE" und die Funktionsblöcke 20K und 20L jeweils Aufrufe des Funktionsblocks vom Typ "BINÄR INPUT".

Hiernach folgt nun die Beschreibung der Funktion der Steuer- und Regeleinrichtung, die diese Funktionsblöcke enthält.

Der Mikroprozessor 1 (Fig. 1) aktiviert das Ablauf-Steuerprogramm 6. Nach einem Taktsignal liest das Ablauf-Steuerprogramm 6 einen ersten Datensatz der Verknüpfungsinformationen 7. Die Verknüpfungsinformationen 7 werden gebildet durch eine Liste, die mehrere Datensätze enthält. Pro Aufruf eines Funktionsblocks 20 ist ein Datensatz vorhanden.

Die Liste der Verknüpfungsinformationen 7 kann die einzelnen Datensätze in beliebiger Reihenfolge enthalten. Der Aufruf der Datensätze dieser Liste kann vorteilhaft in einer solchen Reihenfolge erfolgen, daß die Funktionsblöcke 20A bis 20L in der in der Fig. 5 dargestellten Ordnung von oben nach unten und von links nach rechts aufgerufen werden. Es ist aber auch möglich, die Reihenfolge nicht derart zu strukturieren und stattdessen vorteilhaft die Reihenfolge gemäß den Ablaufinformationen 10 zu steuern. Die Ablaufinformationen 10 enthalten dann die Reihenfolge des Aufrufs der einzelnen Funktionsblöcke 20.

Für den nachfolgend dargestellten Ablauf sei angenommen, daß die Abarbeitung gemäß der oben dargestellten Reihenfolge von oben nach unten und von links nach rechts erfolgt.

Folglich wird beim ersten Aufruf eines Funktionsblocks 20 durch das Ablauf-Steuerprogramm 6 der erste Funktionblock 20A aufgerufen. Beim Aufruf werden dem Funktionsblock 20A die zum ersten Aufruf gehörenden Parameter aus den Funktionsblock-Parametern 8 übergeben. Damit wird der in der Schnittstellen-Baugruppe 4A anliegende Wert des von der Außentemperatur abhängigen Werts des Widerstands des Außentemperaturfühlers 35 an den Funktionsblock 20A übergeben. Daß der Funktionsblock 20A dies überhaupt tun kann, ergibt sich den von Parametern der Funktionsblock-Parameter 8. Er erhält nämlich dadurch auch die Angabe, woher er seinen Eingangswert zu holen hat, beispielsweise die Adresse der ersten Schnittstellen-Baugruppe 4A. Vorteilhaft enthält der Parametersatz auch Daten über den Zusammenhang zwischen dem Widerstand und der Temperatur. Dieser Zusammenhang muß somit nicht im Funktionsblock 20A fest implementiert sein, sondern wird durch die übergebenen Parameter bestimmt. Das hat den Vorteil, daß der gleiche Funktionsblock 20A für unterschiedliche Typen von Meßwiderständen als Außentemperaturfühler 35 geeignet ist.

Der Funktionsblock 20A wandelt den Widerstandswert des Außentemperaturfühlers 35 in eine Temperatur um und speichert diesen in den Prozeßdaten 9 ab. Daß das geschieht, wird wiederum durch die dem Funktionsblock übergebenen Parameter bestimmt.

Vorteilhaft können dem Funktionsblock 20A auch Werte als Parameter übergeben werden, die es dem Funktionsblock 20A erlauben, ohne weiteres festzustellen, ob der Außentemperaturfühler 35 einwandfrei funktioniert. Wenn ein bestimmter Grenzwert des Widerstands nämlich unterschritten wird, dann liegt ganz offensichtlich ein Kurzschluß des Temperaturfühlers 35 vor. Wird ein anderer bestimmter Grenzwert des Widerstands überschritten, so liegt ganz offensichtlich ein Unterbruch im Temperaturfühler 35 vor. Auf diese Weise ist es möglich, daß der Funktionsblock 20A eine Störung signalisieren kann, die, wieder durch einen Parameter bestimmt, in die Prozeßdaten 9 geschrieben wird.

Damit ist der Funktionsblock 20A abgearbeitet und die Kontrolle des weiteren Ablaufs geht wieder an das Ablauf-Steuerprogramm 6 über. Dieses liest nun wiederum die Verknüpfungsinformationen 7. Der nächste Datensatz der Verknüpfungsinformationen 7 führt zum Aufruf des Funktionsblocks 20B mit dem nächsten Satz der Funktionsblock-Parameter 8. Dieser Parameter-Satz enthält die Werte für den unteren Grenzwert $W_U$, für den oberen Grenzwert $W_O$ und die Angaben, daß als Eingangssignal der vom Funktionsblock 20A in die Prozeßdaten 9 geschriebene Wert übernommen und als Ausgangsssginal ein Wert zur Übergabe an den Funktionsblock 20D in die Prozeßdaten 9 geschrieben werden soll.

Der Funktionsblock 20B vom Typ "STETIG ZWEIPUNKT" hat das zuvor ausführlich geschilderte Verhalten. Unter Berücksichtigung der Grenzwerte $W_U$, $W_O$ und jenes Parameters, der das Schaltverhalten bestimmt, wird vom Funktionsblock 20B ein Ausgangssignal in Form einer Schaltbedingung $S_1$ ermittelt und wiederum in die Prozeßdaten 9 geschrieben.

Nach der Abarbeitung des Funktionsblocks 20B liest das Ablauf-Steuerprogramm 6 den nächsten Datensatz der Verknüpfungsinformationen 7. Dadurch wird der Funktionsblock 20D aufgerufen. Zu seinem Parametersatz der Funktionsblock-Parameter 8, die beim Aufruf in den Parameter-Satz 25 des Funktionsblocks 20D geschrieben werden, gehören Schaltzeitpunkte für das Ein- und das Ausschalten und die aktuelle Systemzeit. Aufgrund dieser Parameter ermittelt der Funktionsblock 20D, ob das zu schaltende Organ gemäß den Zeit-Schaltbedingungen ein- oder ausgeschaltet sein muß, und übergibt eine Schaltbedingung $S_2$ an den entsprechenden Speicherplatz der Prozeßdaten 9.

Der nächste Datensatz führt zum Aufruf des Funktionsblocks 20C mit gleichzeitiger Übergabe der zugehörigen Parameter. Durch diese Parameter wird festgelegt, welche Auswahlart der Funktionsblock 20C bei diesem Aufruf vornehmen soll. Für diesen Fall ist in den Parameter-Satz 25 eingeschrieben worden, daß die Auswahl von der Art "UND-Verknüpfung" sein soll und daß zwei Eingänge zu verknüpfen sind. Ebenfalls im Parameter-Satz steht, daß dem einen Eingang die Schaltbedingung $S_1$ und dem anderen Eingang die Schaltbedingung $S_2$ zugeordnet sind, die aus den Prozeßdaten 9 gelesen werden. Der Funktionsblock 20C verknüpft die beiden an seinen Eingängen anliegenden Schaltbedingungen $S_1$ und $S_2$ gemäß einer UND-Funktion und schreibt das Ergebnis als Schaltbedingung $S_3$ an den entsprechenden Speicherplatz der Prozeßdaten 9. Die Schaltbedingung $S_3$ enthält nun die Information, ob die Lüftung gemäß Temperatur- und Zeitschalt- Kriterium ein- oder ausgeschaltet sein muß.

Der nächsten Verknüpfungsinformation entsprechend wird der Funktionsblock 20E unter Übergabe seiner Parameter aus den Funktionsblock-Parametern 8 an den Parameter-Satz 25 des Funktionsblocks 20E aufgerufen. Im Parameter-Satz 25 ist nun die Information enthalten, daß für diesen Aufruf gültig ist, daß der Funktionsblock 20E zwei Ausgänge zu steuern hat und daß er beim Einschalten zuerst den ersten Ausgang ansteuern soll und erst nach einer ebenfalls im Parameter-Satz 25 enthaltenen Verzögerungszeit $t_{V1}$ den zweiten Ausgang. Im Parameter-Satz 25 ist außerdem enthalten, wie die Reihenfolge beim Abschalten sein soll und wie groß die Verzögerung sein soll.

Der Funktionsblock 20E ermittelt aus dem Werten an seinem Eingang und den Verzögerungszeiten $t_{V1}$ und $t_{V2}$ unter Berücksichtungung des Systemzeitablaufs einen ersten Schaltbefehl $B_{11}$ und einen zweiten Schaltbefehl $B_{12}$ und schreibt diese Befehle in die Prozeßdaten 9.

Anschließend erfolgt, vom Ablauf-Steuerprogramm 6 in zuvor beschriebener Weise gesteuert, der Aufruf des Funktionsblocks 20F unter Übergabe von Parametern an seinen Parameter-Satz 25. Beim Aufruf wird der Schaltbefehl $B_{11}$ aus den Prozeßdaten 9 in den Funktionsblock 20F eingelesen. Der Funktionsblock 20F prüft, ob der Schaltbefehl $B_{11}$ in einen EIN- oder AUS-Schaltbefehl umgesetzt werden kann bzw. muß. Diese Prüfung kann beispielsweise dadurch erfolgen, daß an den Funktionsblock 20F angeschlossene, hier aber der Übersichtlichkeit wegen weggelassener Überwachungsorgane des anzusteuernden Motors wie Motorschütz und-/oder Strömungswächter, geprüft werden. Solche Überwachungsorgange können in analoger Weise wie die Motoren der Ventilatoren 31 und 32 über weitere Schnittstellen-Baugruppen 4 angeschlossen sein.

Der Funktionsblock 20F erzeugt einen Schaltbefehl $B_{21}$ für den Motor des Zuluft-Ventilators 31. Dieser Schaltbefehl $B_{21}$ wird in die Prozeßdaten 9 geschrieben.

Als nächstes erfolgt nun durch das Ablauf-Steuerprogramm 6 der Aufruf des Funktionsblocks 20G. Das ist ein Aufruf des identischen Funktionsblocks wie beim Aufruf des Funktionsblocks 20F, jedoch unter Übergabe anderer Parameter aus den Funktionsblock-Parametern 8. Bei diesem Aufruf wird dem Funktionsblock 20G der Schaltbefehl $B_{12}$ übergeben. Der Funktionsblock 20G erzeugt einen Schaltbefehl $B_{22}$ für den Motor des Abluft-Ventilators 32. Der Schaltbefehl $B_{22}$ wird in die Prozeßdaten 9 geschrieben.

Gesteuert vom Ablauf-Steuerprogramm 6 erfolgt nun der Aufruf des Funktionsblocks 20H. Dabei wird der Schaltbefehl $B_{21}$ aus den Prozeßdaten 9 eingelesen und in einen Schaltbefehl $B_{31}$ umgesetzt. Im aktualisierten Parameter-Satz 25 ist enthalten, an welche Schnittstellen-Baugruppe 4 der Befehl zu übermitteln ist. Das kann eine Adresse der Schnittstellen-Baugruppe 4B sein. Damit wird nun die Schnittstellen-Baugruppe 4B angesteuert, die den effektiven Schaltbefehl für den Motor des Zuluft-Ventilators 31 erzeugt.

Daran anschließend erfolgt, wiederum vom Ablauf-Steuerprogramm 6 gesteuert, der Aufruf des Funktionsblocks 20I. Das ist der zweite Aufruf des Funktionsblocks vom Typ "BEFEHLSAUSGABE" und von ihm wird in analoger Weise die Schnittstellen-Baugruppe 4C angesteuert, die den Motor des Abluft-Ventilators 32 schaltet.

Der nächste Funktionsblock 20, der vom Ablauf-Steuerprogramm 6 abgearbeitet wird, ist der Funktionsblock 20K. Er liest von der Schnittstellen-Baugruppe 4D den Schaltzustand des Strömungswächters 33 ein und schreibt ein entsprechendes Stellungssignal in die Prozeßdaten 9 ein. In gleicher Weise liest der nachfolgend abgearbeitete Funktionsblock 20L den Schaltzustand des Strömungswächters 34 von der Schnittstellen-Baugruppe 4E ein und schreibt ein entsprechendes Stellungssignal in die Prozeßdaten 9 ein.

Die Kontrolle geht wiederum an das Ablauf-Steuerprogramm 6 zurück. Dieses stellt fest, daß keine weitere Verknüpfungsinformation vorhanden ist, sondern beispielsweise ein "END OF DATA"-Signal, und kehrt zum ersten Aktionsblock 11 zurück. Trifft das nächste Taktsignal ein, erfolgt die nochmalige Abarbeitung aller Funktionsblöcke 20A bis 20I in der zuvor beschriebenen Weise. Dies wiederholt sich zyklisch.

Bei der zuvor dargestellten Beschreibung der Funktionsweise der Steuer- und Regeleinrichtung wurden zwischen den Funktionsblöcken 20B bis 20I als Verknüpfungsinformationen 7 nur Steuerinformationen übergeben. Es ist jedoch vorteilhaft, zwischen den Funktionsblöcken 20 auch Meldeinformationen auszutauschen. Meldeinformationen sind Zustandsinformationen einzelner Funktionsblöcke 20, die an hierarchisch übergeordnete Funktionsblöcke 20 entgegen der Richtung der Übergabe von Steuerinformationen übergeben werden. Vorteilhaft bestehen also die Verknüpfungsinformationen 7 aus Steuerinformationen und Meldeinformationen.

Nachfolgend wird die Weitergabe von Meldeinformationen zwischen Funktionsblöcken an einem Beispiel erläutert. Der Funktionsblock 20K hat den Schaltzustand des Strömungswächters 33 ermittelt und gibt ihn an den Funktionsblock 20F zurück. Hat der Funktionsblock 20F die Steuerinformation, daß der Motor des Zuluft-Ventilators 31 laufen soll, an den Funktionsblock 20H übermittelt, so kann durch den Funktionsblock 20K geprüft werden, ob der Zuluft-Ventilator 31 tatsächlich läuft. Einige Zeit nach dem Anlauf des Motors des Zuluft-Ventilators 31 müßte der Strömungswächter 33 melden, daß Strömung herrscht. Nur dann, wenn einige Zeit nach der Ausgabe der Steuerinformation der Strömungswächter 33 anspricht, funktioniert der Zuluft-Ventilator 31 richtig. Spricht der Strömungswächter 33 dagegen nicht innerhalb der vorgegebenen Zeitspanne an, die durch den Parameter-Satz 25 des Funktionsblocks 20F bestimmt ist, so liegt eine Störung vor. Es ist vorteilhaft, wenn der Funktionsblock 20F die Tatsache dieser Störung seinerseits in die Prozeßdaten 9 einschreibt und wenn der Funktionsblock 20E diesen Störungszustand aus den Prozeßdaten 9 liest.

In gleicher Weise kann auch der Funktionsblock 20G feststellen, ob der Strömungswächter 34 des Abluft-Ventilators 32 anspricht.

Der Funktionsblock 20E kann also durch Lesen der entsprechenden Prozeßdaten 9 erkennen, ob an einem der ihm nachgeordneten Ventilatoren 31, 32 eine Störung vorliegt. Damit ist der Funktionsblock 20E beispielsweise in der Lage, die Zuschaltung des Abluft-Ventilators 32 dann nicht vorzunehmen, wenn der Zuluft-Ventilator 31 nicht läuft.

Es ist vorteilhaft, wenn die Steuerinformationen nicht nur aus den Befehlen "EIN" oder "AUS" bestehen, sondern mehrbegriffig sind. So können beispielsweise mehrere "EIN"-Befehle vorliegen, beispielsweise "STUFE 1", "STUFE 2" usw. Vorteilhaft ist, wenn die Steuerinformation über solche Signale "Befehl" hinaus auch noch Signale "Freigabe" und "Verriegelung" umfaßt. Mit dem Signal "Befehl" wird einem nachgeordneten Funktionsblock 20 ein Befehl übermittelt, während mit dem Signal "Freigabe" ein nachgeordneter Funktionsblock 20 zum Schalten freigegeben, aber nicht direkt geschaltet wird. Analog dazu wird durch das Signal "Verriegelung" bei einem nachfolgenden Funktionsblock 20 die Wirkung eines Signals "Befehl", das von einem anderen Funktionsblock 20 stammen kann, verhindert.

Vorteilhaft ist es, wenn auch die Meldeinformation sich nicht auf die Meldung einer Störung - "STÖRUNG" oder "KEINE STÖRUNG" beschränkt, sondern wenn die Meldeinformation außerdem Signale "BEREIT" und-/oder "BETRIEB" enthält. Auf diese Weise kann ein übergeordneter Funktionsblock 20 Details über den Zustand eines nachgeordneten Funktionsblocks 20 gemeldet bekommen.

Die Übertragung solchermaßen umfassender Meldeinformationen von einem Funktionsblock 20 zu einem anderen Funktionsblock 20 ermöglicht den Verzicht auf spezielle, jeweils separat zu bildender Verknüpfungen von Meldeinformationen. So ist es beispielsweise nicht erforderlich, beim Aufruf des Funktionsblocks 20E separat zu prüfen, ob die an die Schnittstellen-Baugruppen 4D bzw. 4E angeschlossen Strömungswächter 33 bzw. 34 angesprochen haben, da der Funktionsblock 20E von den Funktionsblöcken 20F bzw. 20G entsprechende Meldeinformationen enthält, die ihrerseits auf den Meldeinformationen der Funktionsblöcke 20K und 20L beruhen.

Es ist vorteilhaft, wenn mittels eines Parameter-Satzes der Funktionsblock-Parameter 8 bestimmbar ist, auf welche Weise ein Funktionsblock 20 auf die ihm übermittelten Meldeinformationen reagieren soll.

Eine Steuer- und Regeleinrichtung der zuvor beschriebenen Art zeichnet sich dadurch aus, daß sie sehr einfach zu programmieren ist. Ein Programmieren in dem Sinn, daß ein Programmcode erzeugt werden müßte, ist gar nicht nötig. Das Programmieren der Steuer- und Regeleinrichtung erschöpft sich in folgenden Schritten:
- Auswahl jener Funktionsblöcke, die zur Lösung der Steuer- und Regelaufgabe nötig sind,
- Verknüpfung der Ein- und Ausgänge der verschiedenen Funktionsblöcke gemäß einem aufzustellenden Schema, das aus dem Anlagenschema abgeleitet werden kann, und
- Festlegen der Parameter.

Es ist weiter vorteilhaft, wenn der einem Funktionsblock 20 zugehörige Parameter-Satz 25 voreingestellte, sogenannte Default-Werte enthält. In dem Fall müssen beim Ausführen der oben genannten Schritte weniger Parameter spezifiziert und beim Abarbeiten des Funktionsblocks 20 weniger Parameter von den Funktionsblock-Parametern 8 an den Parameter-Satz 25 übergeben werden.

Dadurch, daß die Funktionsblöcke durch Parameter charakterisiert sind, ist es möglich, einen Funktionsblock bestimmter Funktion mit einem bestimmten Parameter-Satz gegen einen anderen mit gleicher Funktion und mit dem gleichen Parameter-Satz auszutauschen, ohne daß Verknüpfungen zu anderen Funktionsblöcken beachtet oder gar geändert werden müßten. Dies erlaubt die Fortentwicklung des Programmcodes eines Funktionsblocks, ohne daß dadurch Änderungen an den Verknüpfungsinformationen 7 oder an den Funktionsblock-Parametern 8 nötig wären.

Das Konzept der Aufteilung des Programmcodes in einzelne Funktionsblöcke einer Funktionsblock-Bibliothek 5 ermöglicht es, jeden Funktionsblock selbständig zu testen. Gleichzeitig ist es möglich, später für neue Regel- und Steueraufgaben neue Funktionsblöcke zur Funktionsblock-Bibliothek 5 hinzuzufügen. Die Funktionsblock-Bibliothek 5 ist in einem Read-Only-Festwertspeicher enthalten. Durch Ersatz dieser Speicherbausteine durch andere mit einer neueren, erweiterten Version der Funktionsblock-Bibliothek 5 ist es möglich, die Steuer- und Regeleinrichtung für erweiterte Aufgaben zu benützen, ohne daß dabei die bisherige Struktur der Verknüpfungsinformationen 7 und der Funktionsblock-Parameter 8 geändert werden müßte. Dies ermöglicht die Aufwärtskompatibilität der Steuer- und Regeleinrichtung.

Die Parameter können effektive Werte sein, aber auch Pointer auf bestimmte Adressen, in denen Werte abgelegt sind.

Die Reihenfolge der Abarbeitung der einzelnen Funktionsblöcke 20 kann auch durch Ablaufinformationen 10 bestimmt werden. Dadurch läßt sich eine Optimierung des Ablaufs erreichen.

Es ist vorteilhaft, wenn die Verknüpfungsinformationen 7, die Funktionsblock-Parameter 8 und Ablaufinformationen 10 in einem unverlierbaren Speicher gespeichert sind.

Außer den zuvor erwähnten Funktionsblöcken 20 enthält die Funktionsblock-Bibliothek 5 viele weitere Typen, so beispielsweise einen Typ "REGLER". Dabei wird in vorteilhafter Weise das Regelverhalten (P, PI, PID usw.) durch Parameter bestimmt.

**Patentansprüche**

1. Programmierbare Steuer- und Regeleinrichtung mit einem Mikroprozessor (1), einem Programmspeicher (2), einem Datenspeicher (3) und Schnittstellen-Baugruppen (4) von und zu einer zu steuernden Anlage, wobei
   - der Programmspeicher (2) eine von den individuellen Funktionen der Einrichtung unabhängige Funktionsblock-Bibliothek (5) und ein Ablauf-Steuerprogramm (6) enthält,
   - im Datenspeicher (3) individuelle Verknüpfungsinformationen (7) und individuelle Funktionsblock-Parameter (8) speicherbar sind und
   - das Ablauf-Steuerprogramm (6) anhand der Verknüpfungsinformationen (7) zur Individualisierung der Einrichtung Funktionsblöcke (20) aus der Funktionsblock-Bibliothek (5) auswählt und miteinander verknüpft,
   dadurch gekennzeichnet,
   - daß die im Programmspeicher (2) enthaltene Funktionsblock-Bibliothek (5) in Maschinensprache des Mikroprozessors (1) codiert ist und aus einer Menge fix programmierter, voneinander unabhängiger, aufeinander abgestimmter und miteinander verknüpfbarer Funktionsblöcke (20) besteht,
   - daß das im Programmspeicher (2) enthaltene und vom Mikroprozessor (1) aktivierbare Ablauf-Steuerprogramm (6) anhand der Verknüpfungsinformationen (7) bestimmte, einzelne Funktionsblöcke (20) der Funktionsblock-Bibliothek (5) aufruft und diesen zugehörige Funktionsblock-Parameter (8) übergibt,
   - daß ein Funktionsblock (20) der Funktionsblock-Bibliothek (5) einen unterschiedlichen, durch die Funktionsblock-Parameter (8) bestimmbaren Funktionsumfang besitzt,
   - daß die Reihenfolge, mit der das Ablauf-Steuerprogramm (6) einzelne Funktionsblöcke (20) der Funktionsblock-Bibliothek (5) aufruft, durch im Datenspeicher (3) gespeicherte Ablaufinformationen (10) bestimmt ist und
   - daß bei einem Aufruf eines Funktionsblocks (20) in Abhängigkeit von den Funktionsblock-Parametern (8) bestimmte Prozeßdaten (9) aus dem Datenspeicher (3) und/oder aus einer Schnittstellen-Baugruppe (4) gelesen, behandelt und wieder in den Datenspeicher (3) und/oder die Schnittstellen-Baugruppe (4) geschrieben werden.

2. Steuer- und Regeleinrichtung nach Anspruch 1, dadurch gekennzeichnet, daß das Ablauf-Steuerprogramm (6) die Reihenfolge der Abarbeitung der einzelnen Funktionsblöcke (20) der Funktionsblock-Bibliothek (5) aufgrund der Reihenfolge der Datensätze der Verknüpfungsinformationen (7) selbst bestimmt.

3. Steuer- und Regeleinrichtung nach Anspruch 1 oder 2, dadurch gekennzeichnet, daß der Datenspeicher (3) aus mindestens einem unverlierbaren Speicher und mindestens einem flüchtigen Speicher besteht.

4. Steuer- und Regeleinrichtung nach Anspruch 3, dadurch gekennzeichnet, daß Verknüpfungsinformationen (7), Funktionsblock-Parameter (8) und Ablaufinformationen (10) in dem unverlierbaren Speicher gespeichert sind.

5. Steuer- und Regeleinrichtung nach Anspruch 2, dadurch gekennzeichnet, daß die Verknüpfungsinformationen (7) aus Steuerinformationen und Meldeinformationen bestehen.

6. Steuer- und Regeleinrichtung nach Anspruch 5, dadurch gekennzeichnet, daß die Steuerinformationen aus drei Signalen Befehl, Freigabe und Verriegelung bestehen.

7. Steuer- und Regeleinrichtung nach Anspruch 5, dadurch gekennzeichnet, daß die Meldeinformationen aus drei Signalen Bereit, Betrieb und Störung bestehen.

8. Steuer- und Regeleinrichtung nach Anspruch 7, dadurch gekennzeichnet, daß mittels eines Parameter-Satzes der Funktionsblock-Parameter (8) bestimmbar ist, auf welche Weise ein Funktionsblock (20) auf die Meldeinformationen reagieren soll.

**Claims**

1. A programmable control and regulation apparatus comprising a microprocessor (1), a program memory (2), a data memory (3) and interface units (4) from and to an installation to be controlled, wherein
   - the program memory (2) includes a functional block library (5) which is independent of the individual functions of the apparatus, and a sequence control program (6),
   - individual items of connective information (7) and individual functional block parameters (8) can be stored in the data memory (3), and
   - the sequence control program (6) selects functional blocks (20) from the functional block library (5) and connects them together by means of the items of connective information (7), for individualising the apparatus,
   characterised in that
   - the functional block library (5) contained in the program memory (2) is encoded in the machine language of the microprocessor (1) and comprises a quantity of fixedly programmed, mutually independent functional blocks (20) which are matched to each other and which are interconnectable,
   - the sequence control program (6) which is contained in the program memory (2) and which is activatable by the microprocessor (1) calls up individual functional blocks (20) of the functional block library (5), which are determined by means of the items of connective information (7), and applies to said functional blocks associated functional block parameters (8),
   - a functional block (20) of the functional block library (5) has a different function extent which can be determined by the functional block parameters (8),
   - the order in which the sequence control program (6) calls up individual functional blocks (20) of the functional block library (5) is determined by items of sequence information (10) which are stored in the data memory (3), and
   - when a functional block (20) is called up, in dependence on the functional block parameters (8), given process data (9) are read out of the data memory (3) and/or out of an interface unit (4), processed, and written back into the data memory (3) and/or the interface unit (4).

2. A control and regulation apparatus according to claim 1 characterised in that the sequence control program (6) determines the order of running of the individual functional blocks (20) of the functional block library (5) on the basis of the order of the data sets of the items of connective information (7) themselves.

3. A control and regulation apparatus according to claim 1 or claim 2 characterised in that the data memory (3) comprises at least one non-volatile memory and at least one volatile memory.

4. A control and regulation apparatus according to claim 3 characterised in that items of connective information (7), functional block parameters (8) and items of sequence information (10) are stored in the non-volatile memory.

5. A control and regulation apparatus according to claim 2 characterised in that the items of connective information (7) comprise items of control information and items of signalling information.

6. A control and regulation apparatus according to claim 5 characterised in that the items of control information comprise three signals instruction, enable and disable.

7. A control and regulation apparatus according to claim 5 characterised in that the items of signalling information comprise three signals ready, operation and fault.

8. A control and regulation apparatus according to claim 7 characterised in that by means of a parameter set of the functional block parameters (8) it is possible to determine in what way a functional block (20) is to react to the items of signalling information.

**Revendications**

1. Dispositif de commande et de régulation programmable comportant un microprocesseur (1), une mémoire de programme (2), une mémoire de données (3) et des modules d'interface (4) de liaison à partir et en direction d'une installation à commander, dans lequel

- la mémoire de programme (2) contient une bibliothèque (5) de blocs fonctionnels, indépendante des fonctions individuelles du dispositif, et un programme de commande d'exécution (6),
- des informations individuelles de combinaison (7) et des paramètres individuels (8) de blocs fonctionnels peuvent être mémorisés dans la mémoire de données (3), et
- le programme de commande d'exécution (6) sélectionne, sur la base des informations de combinaison (7) pour l'individualisation du dispositif, des blocs fonctionnels (20) à partir de la bibliothèque (3) de blocs fonctionnels et les combine entre eux,

caractérisé en ce

- que la bibliothèque (5) de blocs fonctionnels, qui est contenue dans la mémoire de programme (2), est codée avec le langage machine du microprocesseur (1) et est constituée par une quantité de blocs fonctionnels (20), qui sont programmés de façon fixe, sont indépendants les uns des autres, sont accordés les uns sur les autres et peuvent être combinés entre eux,
- que le programme de commande d'exécution (6), qui est contenu dans la mémoire de programme (2) et peut être activé par le microprocesseur (1), appelle des blocs fonctionnels individuels déterminés (20) de la bibliothèque (5) de blocs fonctionnels à partir des informations de combinaison (7) et transfère des paramètres (8) de blocs fonctionnels, associés à ces blocs fonctionnels,
- qu'un bloc fonctionnel (20) de la bibliothèque (5) de blocs fonctionnels possède un ensemble différent de fonctions, qui peut être déterminé par les paramètres (8) des blocs fonctionnels,
- que la séquence, avec laquelle le programme de commande d'exécution (6) appelle les blocs fonctionnels individuels (20) de la bibliothèque (5) de blocs fonctionnels, est déterminée par des informations d'exécution (10) mémorisées dans la mémoire de données (3), et
- que lors d'un appel d'un bloc fonctionnel (20), des données de traitement (9), déterminées en fonction des paramètres (8) du bloc fonctionnel, sont lues à partir de la mémoire de données (3) et/ou à partir d'un module d'interface (15) et sont à nouveau enregistrées dans la mémoire de données (3) et/ou dans le module d'interface (4).

2. Dispositif de commande et de régulation selon la revendication 1, caractérisé en ce que le programme d'exécution (6) détermine la séquence du traitement des différents blocs fonctionnels (20) de la bibliothèque (5) de blocs fonctionnels, sur la base de la séquence des ensembles de données des informations de combinaison (7) elles-mêmes.

3. Dispositif de commande et de régulation selon la revendication 1 ou 2, caractérisé en ce que la mémoire de données (3) est constituée par au moins une mémoire imperdable et par au moins une mémoire volatile.

4. Dispositif de commande et de régulation selon la revendication 3, caractérisé en ce que des informations de combinaision (7), des paramètres (8) des blocs fonctionnels et des informations d'exécution (10) sont mémorisées dans la mémoire imperdable.

5. Dispositif de commande et de régulation selon la revendication 2, caractérisé en ce que les informations de combinaison (7) sont constituées par des informations de commande et des informations de signalisation.

6. Dispositif de commande et de régulation selon la revendication 5, caractérisé en ce que les informations de commande sont constituées par trois signaux instructions, libération et verrouillage.

7. Dispositif de commande et de régulation selon la revendication 5, caractérisé en ce que les informations de signalisation sont constituées de trois signaux : état prêt, fonctionnement et perturbation.

8. Dispositif de commande et de régulation selon la revendication 7, caractérisé en ce que le paramètre (8) d'un bloc fonctionnel, indiquant la manière avec laquelle un bloc fonctionnel (20) doit réagir aux informations de signalisation, peut être déterminé au moyen d'un ensemble de paramètres.

EP 0 503 256 B1

Fig. 1

Fig. 2

Fig. 3

12

## Fig. 4

## Fig. 5